# EUROPEAN PATENT APPLICATION

(11) **EP 4 822 843 A1**
(43) Date of publication of application: **14.10.2026**
(21) Application number: 26165682.1
(22) Date of filing: 18.03.2026
(51) Int. Cl.: H01M 50/204, H01M 50/249, H01M 50/358, B60L 50/64

(54) **VEHICLE REAR SECTION STRUCTURE**

(30) Priority: 26.03.2025 JP 2025052472
(71) Applicant: Toyota Jidosha Kabushiki Kaisha, Toyota-shi, Aichi-ken 471-8571 (JP)
(72) Inventor: KAWAMOTO, Naoya, Toyota-shi, Aichi-ken, 471-8571 (JP)
(74) Representative: TBK

(57) **Abstract**

A vehicle rear section structure including a storage battery case housing plural storage battery cells, a retaining member arranged at a vehicle front-rear direction rear side of the storage battery case, a smoke discharge vent provided at the retaining member, a first connector made from metal and retained at the retaining member for connecting a first wire thereto, and a second connector made from resin and retained at the retaining member at an opposite side of the first connector from the smoke discharge vent, for connecting a second wire thereto.

## Description

### BACKGROUND

### Technical Field

The present disclosure relates to a vehicle rear section structure.

### Related Art

Japanese Patent Application Laid-Open (JP-A) No. 2023-47012 describes a battery pack including a case, a battery cell provided inside the case, a breathable member for adjusting pressure inside the case provided to a side wall of the case with a seal interposed therebetween, and a pressure-opening vent provided to an upper wall of the case to open pressure inside the case to outside the case when there is a sudden rise in pressure inside the case, in which the case includes a wall surrounding the seal at the side wall.

A smoke discharge channel is provided to a storage battery installed to a vehicle in order to release smoke to outside the vehicle in the unlikely event that smoke has been generated, such as during a collision or the like. Furthermore, a smoke discharge vent is provided to the smoke discharge channel at a vehicle rear side of the storage battery case. Moreover, plural connectors having various wires connected thereto are provided at the vehicle rear side of the storage battery case. In relation to the smoke discharge vent, there is a demand to protect such connectors.

### SUMMARY

A vehicle rear section structure of a first aspect includes a storage battery case housing plural storage battery cells, a retaining member arranged at a vehicle front-rear direction rear side of the storage battery case, a smoke discharge vent provided at the retaining member, a first connector made from metal and retained at the retaining member, for connecting a first wire thereto, and a second connector made from resin and retained at the retaining member at an opposite side of the first connector from the smoke discharge vent, for connecting a second wire thereto.

In the vehicle rear section structure of the first aspect, the smoke discharge vent is provided to the retaining member. The first connector and the second connector are retained by the retaining member. The first wire and the second wire can be respectively connected to the first connector and the second connector.

The first connector is made of metal and has higher heat withstanding properties than the second connector, which is made of resin. The first connector made of metal is positioned further to the smoke discharge vent side than the second connector made of resin. This thereby enables the second connector to be protected from smoke discharged from the smoke discharge vent.

A second aspect is the vehicle rear section structure of the first aspect, wherein an external dimension of the second connector is smaller than an external dimension of the first connector.

In the vehicle rear section structure of the second aspect, the second connector made of resin can be even better protected from smoke discharged from the smoke discharge vent due to the external dimension of the second connector being smaller than the external dimension of the first connector.

A third aspect is the vehicle rear section structure of the first or second aspect, wherein an extension direction of the first wire from the first connector is inclined with respect to a vehicle front-rear direction axis.

In the vehicle rear section structure of the third aspect, the first wire is connected to the first connector inclined with respect to the vehicle front-rear direction axis, and so the first wire can be connected to the first connector in a space that is short in the vehicle front-rear direction.

A fourth aspect is the vehicle rear section structure of the third aspect, wherein the extension direction of the first wire from the first connector is a direction away from the smoke discharge vent on progression toward the vehicle rear side.

In the vehicle rear section structure of the fourth aspect, the first wire is extended in a direction away from the smoke discharged from the smoke discharge vent, enabling the first wire to be protected from such smoke.

A fifth aspect is the vehicle rear section structure of any one of the first to fourth aspects, wherein an extension direction of the second wire from the second connector is inclined with respect to a vehicle front-rear direction axis.

In the vehicle rear section structure of the fifth aspect, the second wire from the second connector is connected inclined with respect to the vehicle front-rear direction axis, and so the second wire can be connected to the second connector in a space that is short in the vehicle front-rear direction.

A sixth aspect is the vehicle rear section structure of the fifth aspect, wherein the extension direction of the second wire from the second connector is a direction away from the smoke discharge vent on progression toward the vehicle rear side.

In the vehicle rear section structure of the sixth aspect, the second wire is extended in a direction away from the smoke discharged from the smoke discharge vent, enabling the second wire to be protected from such smoke.

A seventh aspect is the vehicle rear section structure of any one of the first to sixth aspects, wherein the storage battery case includes a lower case open at an upper face thereof, and an upper cover covering the upper face of the lower case.

In the vehicle rear section structure of the seventh aspect, the upper face of the lower case is covered by the upper cover, enabling a configuration in which the interior of the storage battery case is tightly sealed. Due to the interior of the storage battery case being tightly sealed, unintentional passage of fluids into or out of the storage battery case can be suppressed.

An eighth aspect is the vehicle rear section structure of any one of the first to seventh aspects, wherein the retaining member is provided further upward than a lower face of the storage battery case.

In the vehicle rear section structure of the eighth aspect, contact with the connectors, from foreign objects and the like coming from the road surface, can be reduced compared to configurations in which the retaining member is lower than the lower face of the storage battery case.

### BRIEF DESCRIPTION OF THE DRAWINGS

Exemplary embodiments of the present disclosure will be described in detail based on the following figures, wherein:
Fig. 1 is a plan view illustrating a vehicle rear section structure of a first exemplary embodiment;
Fig. 2 is a perspective view illustrating a vehicle storage battery pack and a smoke discharge structure of a vehicle rear section structure of a first exemplary embodiment;
Fig. 3 is a perspective view illustrating a smoke discharge structure of a vehicle rear section structure of the first exemplary embodiment;
Fig. 4 is a cross-section illustrating a vehicle rear section structure of the first exemplary embodiment, sectioned along a vehicle front-rear direction;
Fig. 5 is a cross-section illustrating a vehicle rear section structure of the first exemplary embodiment, sectioned along a vehicle width direction
Fig. 6 is a cross-section illustrating an enlargement of a vehicle rear section structure of the first exemplary embodiment, sectioned along the vehicle front-rear direction;
Fig. 7 is a cross-section illustrating an enlargement of a vehicle rear section structure of the first exemplary embodiment, sectioned along the vehicle width direction;
Fig. 8 is a perspective view illustrating a vehicle rear section structure of the first exemplary embodiment;
Fig. 9 is a cross-section illustrating a vehicle rear section structure of the first exemplary embodiment, sectioned along the vehicle width direction; and
Fig. 10 is plan view illustrating a vehicle rear section structure of the first exemplary embodiment.

### DETAILED DESCRIPTION

Description follows regarding a vehicle rear section structure of a first exemplary embodiment of the present disclosure, with reference to the drawings. Note that description will mainly focus on areas needed to explain a scope of technology disclosed herein, and areas omitted from explanation are known technology. The same or similar reference numerals will be appended across the drawings to the same or equivalent members, and explanation thereof will be omitted. Furthermore, when plural of the same or equivalent members are included in the drawings, in order to enhance drawing clarity, sometimes reference numerals are only appended to some thereof. Arrow FR, arrow UP, and arrow LH in the drawings respectively indicate vehicle forward, vehicle upward, and vehicle leftward directions of a vehicle 10. When front and rear, up and down, and left and right directions are employed in the following description without particular explanation thereof, then these respectively indicate front and rear in the vehicle front-rear direction, up and down in the vehicle height direction, and left and right in the vehicle width direction (left-right direction).

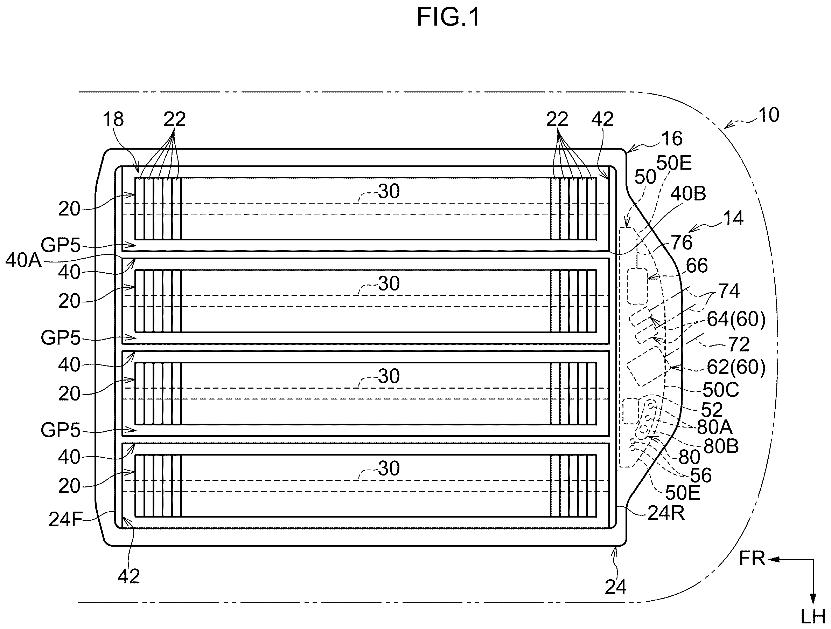

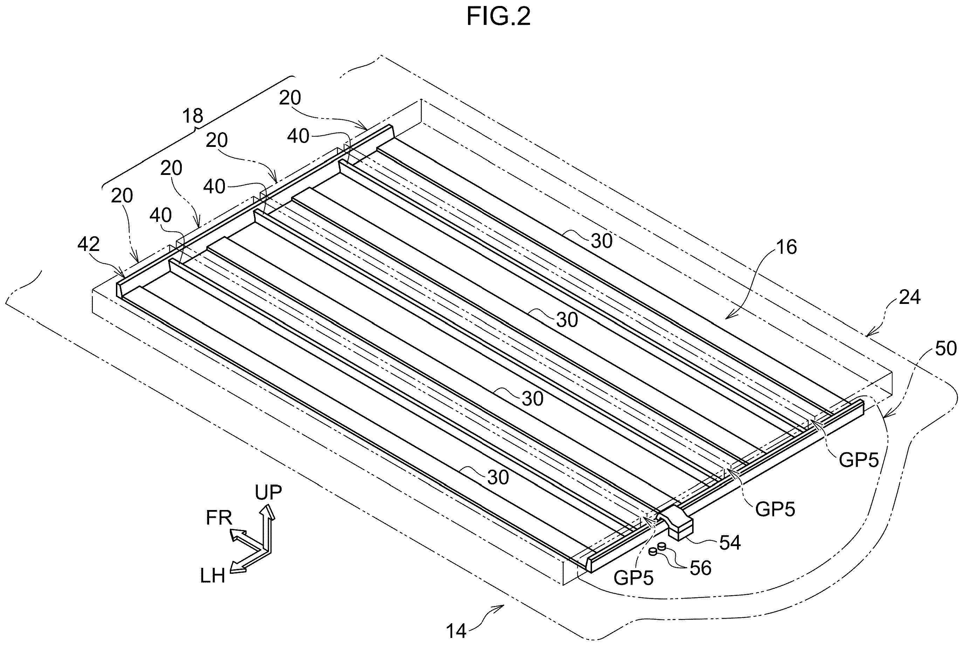

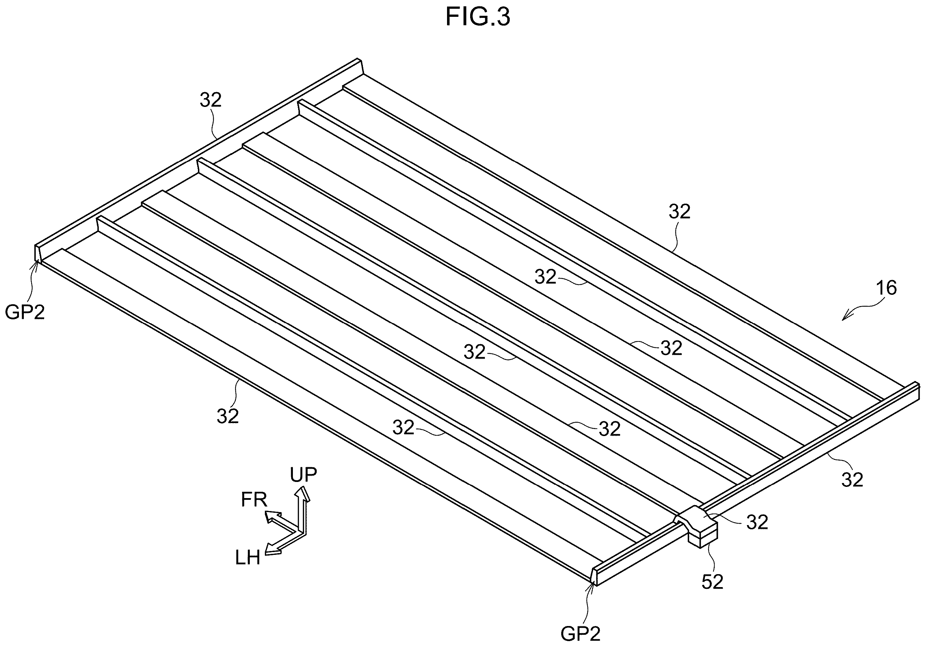

Fig. 1 is a schematic plan view illustrating parts of the vehicle 10 provided with a vehicle rear section structure 14 of the first exemplary embodiment. Fig. 2 is a schematic perspective view illustrating a storage battery pack 18 and a smoke discharge structure 16 of the vehicle rear section structure 14 of the first exemplary embodiment. Fig. 3 is a perspective view illustrating a smoke discharge channel 32 configuring the smoke discharge structure 16 of the vehicle rear section structure 14, as extracted from other configuration.

As illustrated in Fig. 1, the storage battery pack 18 is installed to the vehicle 10. The storage battery pack 18 includes, as illustrated in Fig. 2, plural (four in the present exemplary embodiment) storage battery modules 20. The plural storage battery modules 20 are arranged alongside each other in the vehicle width direction. Gaps GP5 are configured between the storage battery modules 20. There are four of the storage battery modules 20 in the present exemplary embodiment, and so this means that there are three of the gaps GP5 configured between the storage battery modules 20.

The storage battery modules 20 each include plural storage battery cells 22. The plural storage battery cells 22 are arranged in the storage battery modules 20 in a row along the vehicle front-rear direction. Namely, the storage battery pack 18 is configured by plural storage battery modules 20 arranged alongside each other in the vehicle width direction, with each of the storage battery modules 20 including plural storage battery cells 22 arranged in a row along the vehicle front-rear direction. The vehicle front-rear direction is an example of a first direction in the technology disclosed herein, and the vehicle width direction is similarly an example of a second direction in the technology disclosed herein.

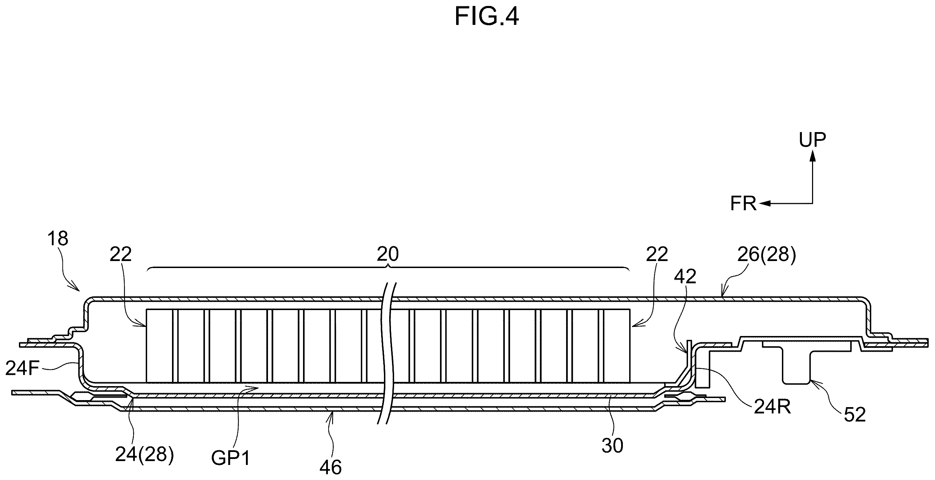

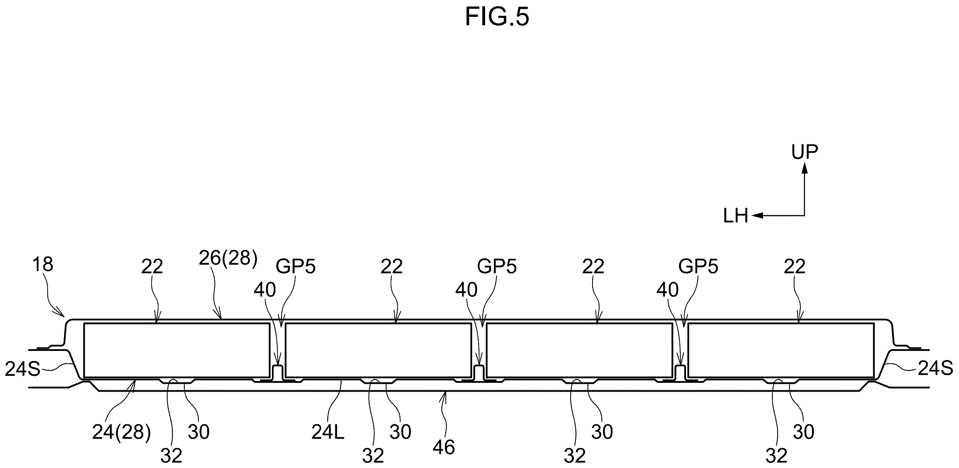

As illustrated in Fig. 4 and Fig. 5, the storage battery pack 18 includes a lower case 24 and an upper cover 26. The lower case 24 is a box-shaped member capable of housing the storage battery modules 20 and includes a lower plate 24L, a front plate 24F, a rear plate 24R, and a left-right pair of side plates 24S. The lower plate 24L is a plate-shaped region that supports the storage battery modules 20 from below. The front plate 24F and the rear plate 24R are each plate-shaped regions respectively provided so as to project upward from the front side and the rear side of the lower plate 24L. The side plates 24S are plate-shaped regions provided so as to project upward from the two vehicle width direction sides of the lower plate 24L. The upper face of the lower case 24 is open.

The upper cover 26 is a lid-shaped member for closing off the upper face of the lower case 24. A storage battery case 28 is configured by the lower case 24 and the upper cover 26, with a periphery of the lower case 24 and a periphery of the upper cover 26 joined together. The plural storage battery modules 20, each configured by the plural storage battery cells 22, are housed in the space inside the storage battery case 28 arranged alongside each other in the vehicle width direction.

A shared panel 46 is arranged at a lower side of the storage battery pack 18. In the present exemplary embodiment, the shared panel 46 covers the lower face of the storage battery pack 18, and protects the storage battery modules 20 from foreign objects and the like coming from the road surface.

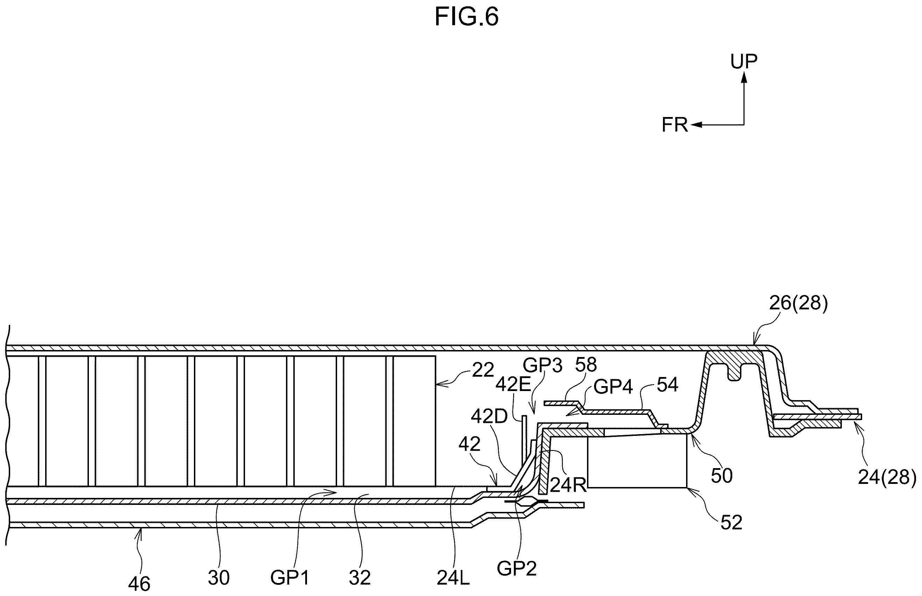

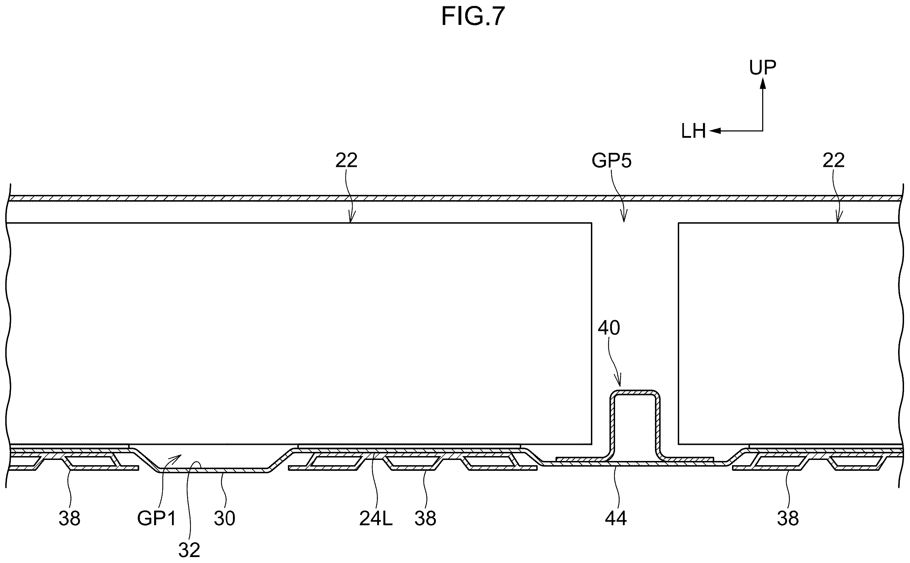

As illustrated in Fig. 6 and Fig. 7, the lower plate 24L of the lower case 24 is bonded to the lower face of each of the storage battery cells 22 using an adhesive. Plural downward protrusions 30 (the same number thereof as the number of storage battery modules 20) are formed to the lower plate 24L. The downward protrusions 30 each project downward at a vehicle width direction central position of the respective storage battery module 20. A gap GP1 is configured at each of the downward protrusions 30 where the lower case 24 is locally separated from the lower face of the storage battery cells 22. The downward protrusions 30 are formed at each of the storage battery modules 20 so as to extend along the vehicle front-rear direction, namely along the storage battery cell 22 row direction. A vehicle front-rear direction length of the downward protrusions 30 is about the same as the vehicle front-rear direction length of the storage battery modules 20, and the downward protrusions 30 extend contiguously along the vehicle front-rear direction from a vicinity of the front plate 24F to a vicinity of the rear plate 24R.

Part of the smoke discharge channel 32 is configured by the gaps GP1 resulting from the downward protrusions 30 being separated from the lower faces of the storage battery cells 22 in this manner. Configuration is such that, in cases in which gas containing smoke (hereafter such gas is simply referred to as "smoke") has been generated in the storage battery cells 22 due to some reason or other, such smoke is discharged from a vehicle width direction central position on the lower faces of the storage battery cells 22. This means that the smoke generated by the storage battery cells 22 inflows into the gaps GP1 configured by the downward protrusions 30. The lower case 24 is an example of a channel member configuring the smoke discharge channel 32.

As illustrated in Fig. 7, coolers 38 are provided to the lower case 24. The coolers 38 configure coolant channels extending along the vehicle front-rear direction on the lower face of the lower case 24, at the two vehicle width direction sides of the respective downward protrusions 30. The heat of the coolers 38 is transmitted to coolant flowing in the coolant channels, enabling the storage battery cells 22 to be cooled.

As illustrated in Fig. 1, Fig. 2, Fig. 5, and Fig. 7, a reinforcement member 40 is arranged in each of the gaps GP5 between the storage battery modules 20. As illustrated in Fig. 7, the reinforcement members 40 are each configured with a downwardly-open, substantially hat-shaped cross-section profile, as viewed in vehicle width direction cross-section.

As illustrated in Fig. 1, the reinforcement members 40 each have a length that reaches the vicinities of the front plate 24F and the rear plate 24R of the lower case 24. The front end 40A (see Fig. 1) of each of the reinforcement members 40 and the rear end 40B thereof are joined to the front plate 24F and the rear plate 24R of the lower case 24 by respective joining members 42. The reinforcement members 40 thereby reinforce the storage battery pack 18. The reinforcement members 40 are rod shaped members extending in the vehicle front-rear direction. The reinforcement members 40 are also reinforcement bars.

As illustrated in Fig. 6, first separation sections 42D are formed to the joining members 42. The first separation sections 42D are formed inclined when viewed in vehicle front-rear direction cross-section, and gaps GP2 are formed between the first separation sections 42D and the lower case 24. The gaps GP2 are each contiguous in the vehicle width direction, and form part of the smoke discharge channel 32. The joining members 42 are examples of channel members configuring the smoke discharge channel 32. The joining members 42 are rod shaped members extending in the vehicle width direction. The joining members 42 are also joining bars.

As illustrated in Fig. 7, cell pedestals 44 are formed to the lower plate 24L of the lower case 24 at positions corresponding to the reinforcement members 40. The cell pedestals 44 are each a region where the lower plate 24L of the lower case 24 is formed as a downward protrusion at a position corresponding to the reinforcement member 40. The cell pedestals 44 are joined to the flange plates 40F of the reinforcement members 40, and close off the open sections at the lower side of the reinforcement members 40.

The front ends 40A and the rear ends 40B of the reinforcement members 40 are open (see Fig. 1) and are in communication with the gaps GP2 illustrated in Fig. 6. Namely, a section of closed cross-section profile (a closed profile in vehicle width direction cross-section) configured by the reinforcement member 40 and the cell pedestal 44 is in communication with the smoke discharge channel 32 configured by the gaps GP2. The closed cross-section profiles configured by the reinforcement members 40 and the cell pedestals 44 accordingly form part of the smoke discharge channel 32. Namely, the reinforcement members 40 and the cell pedestals 44 are an example of a channel member. In the present exemplary embodiment, parts of the lower case 24 also double as the cell pedestals 44. In other words, the lower case 24 that doubles as the cell pedestals 44 is a structure that extends so as to span plural of the reinforcement members 40. In other words, the cell pedestals 44 are integrally provided by the lower case 24 for plural of the reinforcement members 40 and configure part of the smoke discharge channel 32.

As illustrated in Fig. 1, a connector block 50 is arranged at a vehicle rear side of the lower case 24. The connector block 50 is an example of a retaining member.

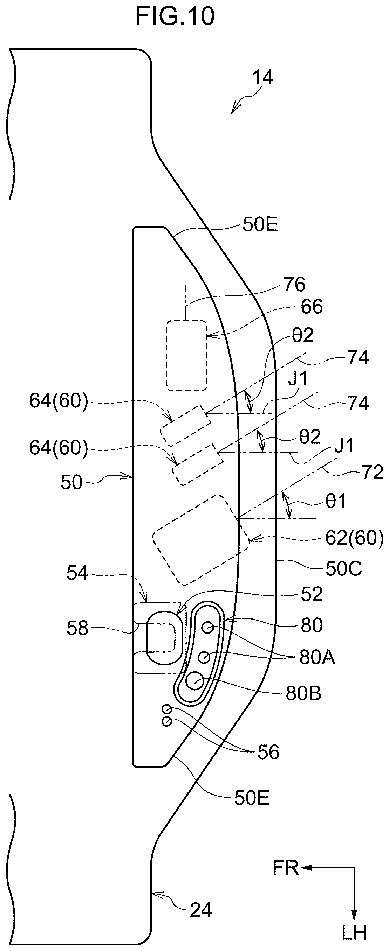

As illustrated in Fig. 10, a front edge (vehicle front side edge) of the connector block 50 has a straight line profile along the vehicle width direction. A rear edge (vehicle rear side edge) of the connector block 50 is curved so as to be convex toward the vehicle rear at a vehicle width direction center thereof. A vehicle width direction central portion 50C of the connector block 50 is accordingly formed longer in the vehicle front-rear direction than the two vehicle width direction end portions 50E thereof.

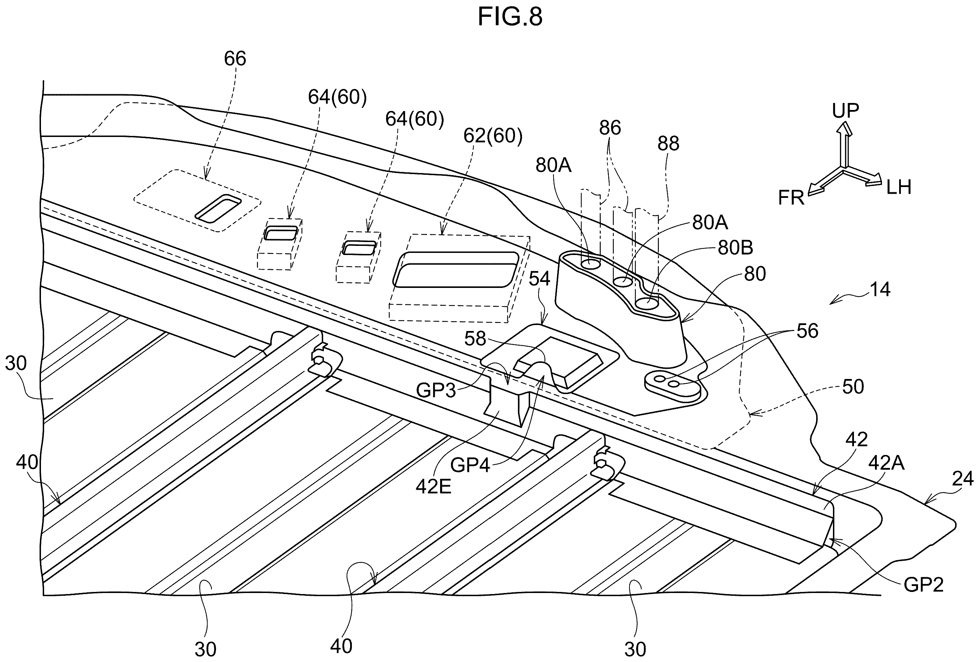

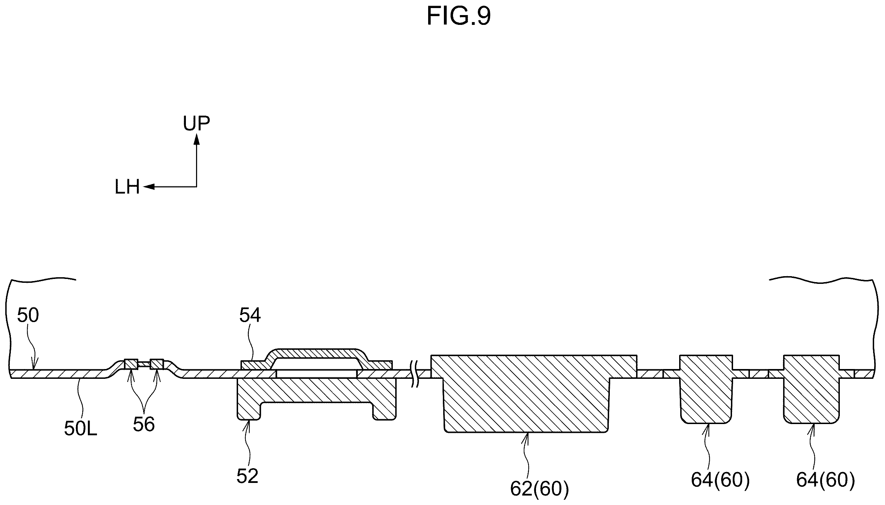

As illustrated in Fig. 8 and Fig. 9, a smoke discharge vent 52 is attached to the connector block 50. A cover plate 54 (see Fig. 2) is attached to the connector block 50 and, between itself and the connector block 50, configures part of the smoke discharge channel 32 from the storage battery pack 18 to the smoke discharge vent 52. [0043] As illustrated in Fig. 6, an upward protrusion 58 is formed to the cover plate 54. The upward protrusion 58 has a profile in which a vehicle width direction central portion thereof is curved upward in the vicinity of the vehicle front side. A gap GP4 is configured between the cover plate 54 and the lower case 24 due to forming the upward protrusion 58. The gap GP4 enables smoke to move in the vehicle front-rear direction, and forms part of the smoke discharge channel 32. The cover plate 54 is an example of a channel member configuring the smoke discharge channel 32.

A second separation portion 42E is provided to the joining member 42 arranged at the vehicle rear side from out of the two joining members 42. The second separation portion 42E is formed at a position in the vehicle width direction corresponding to the upward protrusion 58. A gap GP3 is configured between the second separation portion 42E and the rear plate 24R of the lower case 24. This means that the smoke discharge channel 32 inside the storage battery pack 18 is formed so as to be contiguous from the gaps GP1 between the downward protrusions 30 and the lower faces of the storage battery cells 22, to the smoke discharge vent 52, via the gaps GP2 and gaps GP3 between the joining members 42 and the lower case 24, and via the gap GP4 between the cover plate 54 and the lower case 24.

The smoke discharge vent 52 is configured so as to perform valve-opening when the internal pressure of the smoke discharge channel 32 is at least a specific value higher than the external air pressure of the smoke discharge channel 32. Namely, the smoke discharge vent 52 performs valve-opening when the internal pressure from smoke inflow into the smoke discharge channel 32 has risen to the specific value or higher, and internal gas of the smoke discharge channel 32 is discharged externally.

Furthermore, a membrane member 56 is also attached to the connector block 50. The membrane member 56 is configured to as to prevent passage of liquids (including vapor) while allowing gases to pass through. Moreover, the membrane member 56 is formed such that in cases in which gas passes therethrough, due to the membrane member 56 acting as a resistance to gas movement, such gas does not move all at once over a short period of time.

The membrane member 56 is attached at a position away from the smoke discharge channel 32 that is a position where fluid might move with respect to the smoke discharge channel 32. In the present exemplary embodiment, the membrane member 56 is positioned further toward the vehicle width direction outside than the smoke discharge vent 52. The connector block 50 is an example of a retaining member that retains the membrane member 56 in this manner.

As illustrated in Fig. 9, a first connector 62 and second connectors 64 are arranged on the lower face 50L of the connector block 50. Hereafter, when not discriminating between the first connector 62 and the second connectors 64 these will be referred to as connectors 60. The connectors 60 are arranged in the central portion 50C of the connector block 50, namely, in the section having a longer vehicle front-rear direction length than at the end portions 50E. The first connector 62 is made from metal, and the second connectors 64 are made from resin.

As illustrated in Fig. 10, an external dimension of the second connectors 64 is smaller than that of the first connector 62. The "external dimension" is a length in a direction orthogonal to a flow direction when smoke discharged from the smoke discharge vent 52 flows toward the second connectors 64. In the present exemplary embodiment, the smoke discharge vent 52 and the second connectors 64 are arranged alongside each other in the vehicle width direction, and so the "external dimension" is a direction orthogonal to the vehicle width direction, and is the vehicle front-rear direction in Fig. 1. Namely, a vehicle front-rear direction length of the first connector 62 is longer than a vehicle front-rear direction length of the second connectors 64.

The second connectors 64 are positioned on the opposite side of the first connector 62 to the smoke discharge vent 52. Namely, the metal first connector 62 having a larger external dimension (vehicle front-rear direction length) than the second connectors 64 is positioned between the smoke discharge vent 52 and the resin second connectors 64.

A third connector 66 is also arranged on the lower face 50L of the connector block 50. The third connector 66 is arranged at a position nearer to one of the end portions 50E than the second connectors 64.

A first wire 72 is, for example, connected to the first connector 62. Second wires 74 are connected to the second connectors 64. A third wire 76 is connected to the third connector 66. As an example, the first wire 72 and the third wire 76 are wires through which current flows at a higher voltage than in the second wires 74.

In a state in which the first wire 72 is connected to the first connector 62 and the second wires 74 are connected to the second connectors 64, the extension directions of the first wire 72 and the second wires 74 from their respective connectors are inclined at inclination angles θ1, θ2 with respect to a vehicle front-rear direction axis J1. Even in cases in which there is a narrow spacing between the first connector 62 and the second connectors 64, and various members and the like are arranged at the vehicle rear side thereof, a structure can be realized in which insertion and removal of the first wire 72 and the second wires 74 is easily accomplished due to the extension directions of the first wire 72 from the first connector 62 and the second wires 74 from the second connectors 64 being inclined in this manner.

In particular, in the present exemplary embodiment, these extension directions are directions away from the smoke discharge vent 52 on progression toward the vehicle rear side. This achieves a structure in which gas discharged from the smoke discharge vent 52 is less liable to come into contact with the first wire 72 and the second wires 74 than in a case in which the extension directions are directions approaching the smoke discharge vent 52.

In the example illustrated in Fig. 10, the inclination angle θ1 of the first wire 72 with respect to the axis J1 is the same as the inclination angle θ2 of the second wires 74 thereto. However, these inclination angles θ1, θ2 may be different. Moreover, the inclination angle θ2 may be different among the plural second wires 74.

The extension direction of the third wire 76 from the third connector 66 is the vehicle width direction in a state in which the third wire 76 is connected to the third connector 66. This means that even in cases in which there is a narrow spacing between the third connector 66, and various members and the like arranged at the vehicle rear side thereof, due to the extension direction of the third wire 76 for the third connector 66 being oriented along the vehicle width direction, a structure can be realized in which insertion and removal of the third wire 76 is easily accomplished.

A protection block 80 is formed to the connector block 50 at a position further toward the vehicle rear side than the smoke discharge vent 52 and the membrane member 56. In the present exemplary embodiment, the protection block 80 is a tube shaped member that projects upward from the connector block 50 with a profile flattened in the vehicle front-rear direction. Specifically, the protection block 80 has a profile longer in the vehicle width direction than in the vehicle front-rear direction when viewed from above.

First insertion holes 80A and a second insertion hole 80B are formed at the inside of the protection block 80 so as to pierce through the connector block 50 in the thickness direction thereof (height direction). In the present exemplary embodiment there are two of the first insertion holes 80A, and the second insertion hole 80B is a single hole with a larger diameter than that of the first insertion holes 80A. The two first insertion holes 80A are separated from each other in the vehicle width direction, and the second insertion hole 80B is moreover separated from the first insertion holes 80A in the vehicle width direction.

As illustrated in Fig. 8, circulation pipes 86 for circulating cooling water to vehicle installed equipment are, for example, inserted into the first insertion holes 80A. A wiring pipe 88 for housing plural wires sending electrical signals to installed equipment is inserted into the second insertion hole 80B. The circulation pipes 86 and the wiring pipe 88 are examples of routing members to perform routing through the vehicle. Namely, a structure is achieved in which plural routing members separated from each other in the vehicle width direction are inserted into the protection block 80.

The protection block 80 projects out from the connector block 50 in a tube shape and is configured not liable to being crushed by external force acting in either the vehicle front-rear direction or the vehicle width direction. This thereby enables members (the circulation pipes 86 and wires) inserted inside the protection block 80 to be protected from external force.

Next, description follows regarding the operation of the present exemplary embodiment.

In the vehicle 10 applied with the vehicle rear section structure 14 of the present exemplary embodiment, the storage battery modules 20 are each configured from the plural storage battery cells 22. Namely, the plural storage battery cells 22 can be integrally configured by the storage battery modules 20.

The storage battery cells 22 are arranged in a row along the first direction (the vehicle front-rear direction) in each of the storage battery modules 20, and the storage battery modules 20 are arranged in a row along the second direction (the vehicle width direction). This thereby enables the plural storage battery cells 22 to be arranged efficiently in the first direction and the second direction. In particular, due to the array direction of the storage battery cells 22 in the storage battery modules 20 being the vehicle front-rear direction, the number of the storage battery cells 22 that can be placed in a single row is increased in comparison to configurations in which the storage battery cells 22 are arrayed in the vehicle width direction.

Although smoke is not generated in a normal state of the storage battery cells 22, in cases in which smoke has been generated for some reason or other, the smoke is discharged from a vehicle width direction central position on the lower face of the storage battery cell 22. The smoke then flows to the smoke discharge vent 52 via the smoke discharge channel 32. This smoke is then discharged from the smoke discharge vent 52 when the internal pressure of the smoke discharge channel 32 is higher by a specific amount than the external pressure.

Moreover, the smoke discharge structure 16 of the present exemplary embodiment includes the membrane member 56. The membrane member 56 allows movement of gas with respect to the smoke discharge channel 32, and prevents the movement of liquids. For example, in cases in which the vehicle 10 has travelled to a location where the external pressure is different (for example a region at high altitude), a pressure difference between the internal pressure of the smoke discharge channel 32 and the external pressure becomes greater. The pressure difference in such cases can be alleviated by the membrane member 56 allowing the passage of air.

The membrane member 56 is provided at a position away from the smoke discharge channel 32. The heat and pressure of smoke flowing in the smoke discharge channel 32 is not liable to act on the membrane member 56. This means that the membrane member 56 can be protected from the heat and pressure of the smoke flowing in the smoke discharge channel 32.

Specifically, the membrane member 56 is provided at a position further to the vehicle width direction outside than the smoke discharge vent 52. The membrane member 56 may be positioned further to the vehicle width direction inside than the smoke discharge vent 52, however, in such cases there is a possibility that placement of the membrane member 56 is limited due to relationships to other members. There is little limitation from other members by placing the membrane member 56 further to the vehicle width direction outside than the smoke discharge vent 52, and a configuration in which the heat and pressure of smoke flowing in the smoke discharge channel 32 does not act on the membrane member 56 is realized by a simple structure.

Moreover, the smoke discharge vent 52 is positioned relatively more toward the vehicle width direction center than the membrane member 56, and so this is a structure in which smoke reaches the smoke discharge vent 52 more readily from either the vehicle width direction left or right thereof than in a structure in which the smoke discharge vent 52 is placed at a vehicle width direction end portion.

The membrane member 56 is retained in the connector block 50. Namely, the membrane member 56 can be attached to the vehicle 10 using the connector block 50. Were external force to act on the vehicle 10, then part of the energy from this external force would be absorbed by the connector block 50, enabling damage to be suppressed from occurring to the membrane member 56.

Moreover, the smoke discharge vent 52 is also retained in the connector block 50. Namely, the smoke discharge vent 52 can be attached to the vehicle 10 using the connector block 50. Part of the energy from any external force acting on the vehicle 10 is absorbed by the connector block 50, enabling damage to be suppressed from occurring to the smoke discharge vent 52.

The membrane member 56 and the smoke discharge vent 52 are retained by the connector block 50, and so stable relative positions can be maintained between the membrane member 56 and the smoke discharge vent 52.

The protection block 80 is formed to the connector block 50. The circulation pipes 86 and the wiring pipe 88 are inserted through the protection block 80, enabling the circulation pipes 86 and the wiring pipe 88 to be protected from external force. In particular, in the present exemplary embodiment, the plural routing members (the two circulation pipes 86 and the single wiring pipe 88) are housed in the protection block 80, enabling the plural routing members to be protected. Moreover, in the present exemplary embodiment, the circulation pipes 86 are included in the routing members. This means that leakage of liquid flowing in the circulation pipes 86 can be suppressed due to the circulation pipes 86 being protected. In the present exemplary embodiment, the liquid flowing in the circulation pipes 86 is coolant circulated to installed equipment. Namely, this enables operation of the installed equipment to not be affected due to the circulation of coolant being secured.

The protection block 80 is arranged further toward the vehicle rear side than the membrane member 56 and the smoke discharge vent 52. This means that even if external force from the vehicle rear side were to act, then this external force would be suppressed from acting directly on the membrane member 56 and the smoke discharge vent 52. The membrane member 56 and the smoke discharge vent 52 can thereby be better protected from external force from the vehicle rear side.

The circulation pipes 86 and the wiring pipe 88 are arranged separated from each other in the width direction, and the protection block 80 has a profile flattened in the vehicle width direction, namely a profile longer in the vehicle width direction than in the vehicle front-rear direction when viewed from above. This means that the membrane member 56 can be protected by the protection block 80 from external force from the vehicle rear side over a wide range in the vehicle width direction.

In addition to the smoke discharge vent 52 and the membrane member 56, the first connector 62, the second connectors 64, and the third connector 66 are also attached to the connector block 50. Namely, by employing the connector block 50, the smoke discharge vent 52, the membrane member 56, the first connector 62, the second connectors 64, and the third connector 66 can be retained as an integral unit. Retaining the smoke discharge vent 52, the membrane member 56, the first connector 62, the second connectors 64, and the third connector 66 as an integral unit reduces the number of attachment tasks to attach these members to the vehicle 10 compared to cases in which these members are individually attached to a vehicle.

The first connector 62 and the second connectors 64 are arranged inclined with respect to the vehicle front-rear direction axis J1. The connection direction of the first wire 72 to the first connector 62, and the connection direction of the second wires 74 to the second connectors 64, are also inclined with respect to the axis J1. This enables insertion and removal of the first wire 72 and the second wires 74 to and from the first connector 62 and the second connectors 64, even in a structure in which there is a narrow space for insertion and removal of the first wire 72 and the second wires 74 at the vehicle rear side of the first connector 62 and the second connectors 64.

The extension direction of the first wire 72 from the first connector 62, and the extension directions of the second wires 74 from the second connectors 64, are directions inclined away from the smoke discharge vent 52 on progression toward the vehicle rear side. The first wire 72 and the second wires 74 extend in directions away from the smoke discharged from the smoke discharge vent 52, meaning that the smoke discharged from the smoke discharge vent 52 is not liable to contact the first wire 72 and the second wires 74, enabling the first wire 72 and the second wires 74 to be protected from this smoke.

The extension direction of the third wire 76 from the third connector 66 is the vehicle width direction. The third wire 76 is able to be inserted and removed from the third connector 66 even in a structure in which there is a narrow space for insertion and removal of the third wire 76 at the vehicle rear side of the third connector 66.

The connector block 50 has a profile in which the vehicle width direction central portion 50C is longer than the two end portions 50E. The first connector 62 and the second connectors 64 are retained in the central portion 50C of the connector block 50. Namely, a more extensive mounting surface area can be secured for the first connector 62 and the second connectors 64 than in a structure in which the first connector 62 and the second connectors 64 are retained at either of the two vehicle width direction end portions.

The first connector 62 and the second connectors 64 are retained on the lower face of the connector block 50. This thereby enables an extensive mounting area to be secured for other components and the like on the upper face of the connector block 50.

The first connector 62 is made from metal, and so has higher heat withstanding properties than one made from resin. This means that the first connector 62 is not liable to be affected by heat of the smoke discharged from the smoke discharge vent 52.

The metal first connector 62 is positioned further to the smoke discharge vent 52 side than the resin second connectors 64. This thereby enables the resin second connectors 64 to be protected from the heat of smoke discharged from the smoke discharge vent 52.

Moreover, the second connectors 64 have a smaller external dimension than the first connector 62 when viewed from above. Namely, the first connector 62 of relatively large external dimension is positioned between the smoke discharge vent 52 and the second connectors 64. This thereby enables the second connectors 64 to be better protected by the first connector 62 from heat of the smoke from the smoke discharge vent 52 than configurations in which the first connector 62 and the second connectors 64 have about the same external dimension to each other, or configurations in which the external dimension of the first connector 62 is smaller than the external dimension of the second connectors 64.

An object of the present disclosure is to protect a connector from smoke discharged from a smoke discharge vent.

The present disclosure enables a connector to be protected from smoke discharged from a smoke discharge vent.

## Claims

1. A vehicle rear section structure (14) comprising:
a storage battery case (28) housing a plurality of storage battery cells;
a retaining member (50) arranged at a vehicle front-rear direction rear side of the storage battery case;
a smoke discharge vent (52) provided at the retaining member;
a first connector (62) made from metal and retained at the retaining member, for connecting a first wire thereto; and
a second connector (64) made from resin and retained at the retaining member at an opposite side of the first connector from the smoke discharge vent, for connecting a second wire thereto.

2. The vehicle rear section structure of claim 1, wherein an external dimension of the second connector is smaller than an external dimension of the first connector.

3. The vehicle rear section structure of claim 1, wherein an extension direction of the first wire from the first connector is inclined with respect to a vehicle front-rear direction axis.

4. The vehicle rear section structure of claim 3, wherein the extension direction of the first wire from the first connector is a direction away from the smoke discharge vent on progression toward the vehicle rear side.

5. The vehicle rear section structure of claim 1, wherein an extension direction of the second wire from the second connector is inclined with respect to a vehicle front-rear direction axis.

6. The vehicle rear section structure of claim 5, wherein the extension direction of the second wire from the second connector is a direction away from the smoke discharge vent on progression toward the vehicle rear side.

7. The vehicle rear section structure of claim 1, wherein the storage battery case includes:
a lower case (24) open at an upper face thereof; and
an upper cover (26) covering the upper face of the lower case.

8. The vehicle rear section structure of claim 1, wherein the retaining member is provided further upward than a lower face of the storage battery case.
